# EUROPÄISCHE PATENTSCHRIFT

(11) **EP 3 816 305 B1**
(45) Veröffentlichungstag und Bekanntmachung des Hinweises auf die Patenterteilung: **24.05.2023**
(21) Anmeldenummer: 20195937.6
(22) Anmeldetag: 14.09.2020
(51) Int. Cl.: C21D 1/09, C21D 1/40, B60G 21/055, H05B 3/00, H05B 6/10, C21D 1/34, C21D 1/38, C21D 1/42, C21D 1/52, B21D 7/16, C21D 8/10, C21D 9/00, C21D 9/08, C21D 11/00, F27D 11/02, F27D 11/04, F27D 11/06

(54) **VERFAHREN UND VORRICHTUNG ZUR THERMISCHEN BEHANDLUNG EINES ROHRFÖRMIGEN METALLISCHEN BAUTEILS**
METHOD AND DEVICE FOR HEAT TREATMENT OF A TUBULAR METALLIC COMPONENT
PROCÉDÉ ET DISPOSITIF DE TRAITEMENT THERMIQUE D'UN COMPOSANT MÉTALLIQUE TUBULAIRE

(30) Priorität: 29.10.2019 DE 102019129175
(43) Veröffentlichungstag der Anmeldung: 05.05.2021
(73) Patentinhaber: ThermProTEC GmbH, 77694 Kehl - Marlen (DE)
(72) Erfinder: Gaus, Dr. Rainer, 79279 Vörstetten (DE)
(74) Vertreter: Meissner Bolte Partnerschaft mbB

(56) Entgegenhaltungen:
- EP-A1- 2 149 409
- EP-A1- 2 537 692
- EP-A1- 2 865 548
- WO-A1-2014/121778
- CN-A- 106 274 351
- JP-A- S57 134 520
- US-A- 5 447 580

## Beschreibung

Die Erfindung betrifft ein Verfahren zur thermischen Behandlung eines metallischen Bauteils, das im Wesentlichen rohrförmig ist oder einen rohrförmigen Abschnitt hat, das/der ein erstes und zweites Ende und mindestens einen durch Biegen verformten Bereich aufweist, in dem der Materialquerschnitt infolge des Biegens ungleichmäßig ist, mittels konduktiver Erwärmung über an das erste und zweite Ende angelegte Elektroden. Des Weiteren betrifft sie eine Anordnung zur Durchführung eines solchen Verfahrens.

Es ist bekannt, mechanische Bauteile in verschiedenartigsten geometrischen Konfigurationen einer thermischen Behandlung zur Verbesserung ihrer mechanischen Eigenschaften zu unterziehen. Beispielsweise müssen Fahrwerksstabilisatoren zum Einstellen der geforderten mechanischen Eigenschaften thermisch gehärtet werden. Häufig erfolgt dieser Prozess erst nach der Formung des Bauteils. Zum Erwärmen der Bauteile wird üblicherweise ein Strom im Bauteil aufgeprägt, der dann zu einer entsprechenden Erwärmung des Bauteils führt. Hierzu werden die Bauteile an den Enden mit Elektroden kontaktiert. Als Stromquellen dienen DC oder auch AC Versorgungen.

Aufgrund der durch das Vorformen reduzierten Querschnittflächen kommt es aber im Bereich der Bögen in der Regel zu Überhitzungen, die den einstellbaren Härteverlauf limitieren und die möglichen Heizzeiten einschränken.

Die Bauteile werden in großen Stückzahlen erzeugt und die Taktzeit für den Prozess ist fest vorgegeben. Man versucht, durch Ausgleichszeiten die Temperaturüberhöhung zu minimieren. Dies verlängert jedoch die Taktzeiten und verringert somit die Produktivität des thermischen Behandlungsverfahrens.

Aus dem Druckschriften US 2004/2 266 632 A1, DE 20 2011 002 452 U1, EP2865548 A1 und US 2002/069 945 A1 sind jeweils Verfahren/Vorrichtungen zur thermischen Behandlung eines vorab geformten metallischen Bauteils bekannt, bei denen eine induktive oder konduktive Erwärmung und eine Kühlung mit Luft- oder Wasserbrausen erfolgt.

Ein weiteres Verfahren dieser Art ist in der EP 2 548 751 A1 offenbart, wobei hier auch eine gezielte Abkühlung ausgewählter Bereiche des entsprechenden Bauteils geleert wird. Der Schwerpunkt dieser Offenbarung liegt allerdings bei einer sinnvoll mit der Trocknung und Härtung einer Beschichtung verknüpften thermischen Behandlung des Bauteils.

In der WO 2014/121 778 A1 der Anmelderin wird ein gegenüber den vorgenannten Verfahren verbessertes Verfahren beschrieben, bei dem durch eine gezielte lokale Beaufschlagung von Abschnitten eines vorgeformten metallischen Bauteils, insbesondere eines Fahrwerksstabilisators, mit einem Kühlfluid eine Erhöhung der Produktivität bei einem anschließenden Härtungsverfahren erreicht wird.

Der Erfindung liegt die Aufgabe zugrunde, ein hinsichtlich seiner Produktivität und der Qualität der Verfahrensprodukte verbessertes Verfahren der genannten Art bereitzustellen. Des Weiteren soll eine zur Durchführung eines solchen Verfahrens geeignete Vorrichtung bereitgestellt werden.

Diese Aufgabe wird durch ein Verfahren mit den Merkmalen des Anspruchs 1 bzw. vorrichtungsseitig durch eine Anordnung mit den Merkmalen des Anspruchs 12 gelöst. Vorteilhafte Ausgestaltungen sind Gegenstand der jeweiligen abhängigen Ansprüche.

Die Erfindung beruht auf der Erkenntnis der Erfinder, dass beim konduktiven Härten von mechanischen Bauteilen der in Rede stehenden Art die auf der Außen- und Innenseite von Bogenbereichen unterschiedliche Wandstärke und unterschiedliche Länge des Leitungsweges für den bei der konduktiven Erwärmung eingeprägten Strom zu einem speziellen Effekt führt.

Dieser besteht darin, dass der Bogeninnenbereich wesentlich stärker erwärmt wird als der Außenbereich. Bei schneller Erwärmung mit hohen Strömen (8-15 kA) kommt es zu Temperaturunterschieden von bis zu 300 K zwischen innen und außen. Da für den Vergütungsprozess an allen Stellen mehr als 840 °C erreicht werden müssen, erreicht der Bogeninnenbereich bis zu 1200 °C. Das fördert das unerwünschte Kornwachstum und die Verkohlung an der Oberfläche.

Um diesen beiden Effekten entgegenzuwirken, wird mit der Erfindung vorgeschlagen, vor Beginn oder in der Anfangsphase des eigentlichen Vergütungsschrittes eine zusätzliche gezielte Erwärmung derjenigen Bereiche des Bauteils vorzunehmen, welche im Vergütungsschritt aufgrund der obigen Effekte kälter bleiben. Dies ermöglicht es, den Vergütungs- bzw. Härtungsschritt als solchen in einer Weise zu gestalten, dass die in diesem Schritt realisierte Erwärmung (als Temperaturdifferenz zum Ausgangszustand) für das Bauteil insgesamt niedriger bleibt. Speziell ist mithin vorgesehen, dass das Bauteil vor der oder in einem ersten Zeitabschnitt der konduktiven Erwärmung lokal auf jener Seite des oder jedes gebogenen Bereiches, wo der Materialquerschnitt verringert ist, vorgeheizt wird.

Mit der Erfindung lassen sich somit Qualitätseinbußen beim Bauteil aufgrund unerwünschter Korngrößenverteilungen und/oder Verkohlungen vermeiden und zugleich eine Energieeinsparung im eigentlichen Härtungsschritt erzielen. Zudem kann, unter ansonsten gleichen Bedingungen, eine zeitliche Verkürzung des eigentlichen Härtungsschrittes erreicht werden, die die für den zusätzlichen Erwärmungsschritt ggfs. benötigte Zeit zumindest teilweise kompensiert. Bei geeigneter Verfahrensführung sind somit jedenfalls keine Produktivitätseinbußen zu erwarten.

In einer besonders wichtigen Anwendung handelt es sich bei dem Bauteil um einen Fahrwerkstabilisator eines Landfahrzeuges, der mindestens zwei durch Biegen verformte Bereiche aufweist, wobei jeder der verformten Bereiche lokal vorgeheizt wird. Grundsätzlich sind das vorgeschlagene Verfahren und die zu seiner Durchführung vorgeschlagene Anordnung aber auch für beliebige andere Bauteile mit rohrförmigen Abschnitten geeignet, die einer konduktiven Erwärmung auf relativ hohe Temperaturen unterzogen werden und bei denen sich bogenförmige Bereiche auf deren Innen- und Außenseite ohne spezielle Vorkehrungen deutlich unterschiedlich erwärmen würden.

In einer speziell für die vorgenannte Anwendung geeigneten Ausführung wird das Vorheizen auf eine im Bauteil erreichte Temperatur im Bereich zwischen 50 °C und 250 °C ausgeführt. Für andere Bauteile mit anderen Charakteristika und einer anderen Ausgestaltung des thermischen Hauptprozesses können auch andere Vorwärmtemperaturen zweckmäßig sein.

In einer ersten Ausführung des Verfahrens wird das Vorheizen durch induktive Erwärmung mittels eines dem oder jedem durch Biegen verformten Bereich zugeordneten Induktors ausgeführt. In alternativen physikalisch-technischen Ausführungen kann die Erwärmung mittels den Bogenbereichen zugeordneter Widerstandsheizer und konduktive Wärmeübertragung auf das Bauteil ausgeführt werden. In einer noch anderen Ausführung wird die Erwärmung mittels eines oder mehrerer Strahlungsheizer bewirkt, deren Energie weitgehend als Strahlungswärme, ggf. bis zu einem gewissen Grade kombiniert mit Wärmeleitung durch ein Umgebungsmedium, auf das Bauteil übertragen wird.

Zum Vorheizen der beim konduktiven Haupt-Erwärmungsschritt tendenziell zu kalt bleibenden Bauteil-Bereiche eignen sich auch Methoden, bei denen gezielt und lokal begrenzt (etwa durch geeignete Leitungen, ggfs. mit Ausströmdüsen) Heißluft zugeführt wird, so wie auch auf die entsprechenden Bereiche ausgerichtete Brenner, die mit Gas oder einem flüssigen Brennstoff betrieben werden, oder auch Plasmabrenner. Wichtig bei deren Einsatz ist die Fokussierung der Wärmezufuhr bzw. eine Abschottung solcher Bereiche des Bauteils, die der Vorheizung nicht unterwerfen werden sollen, etwa durch Trennwände oder Ableitbleche oder ähnliches.

Bei jeder dieser Ausgestaltungen kann vorgesehen sein, dass jeder Induktor bzw. Heizer einzeln steuer- oder regelbar ist, wobei für die Steuerung oder Regelung insbesondere die Ist-Temperatur des jeweiligen durch Biegen verformten Bereiches erfasst und das Temperatursignal für die Steuerung bzw. Regelung zu Grunde gelegt wird. Insbesondere kann hierbei die Temperatur berührungslos mittels eines optischen Pyrometers oder mittels eines mit Federkraft an den jeweiligen Bereich angedrückten Kontaktpyrometers gemessen werden.

In einer weiteren zweckmäßigen Ausgestaltung der Erfindung wird das Bauteil zum Vorheizen in eine an seine Gestalt angepasste Vorheizform verbracht, in der der Induktor oder die Induktoren oder Widerstandsheizer oder Strahlungsheizer und optional auch der/die T-Sensor/en platziert sind.

Gemäß einer weiteren Ausgestaltung ist vorgesehen, dass der Induktor oder die Induktoren oder Widerstandsheizer oder Strahlungsheizer und/oder Brenner und/oder Heißluftquellen beim Vorheizen in ihrer Position relativ zum Bauteil einstellbar positioniert werden. Diese Ausführung kann auch mit der vorab genannten kombiniert sein, gemäß derer der oder die Heizer in einer Vorheizform untergebracht sind. Demnach würde diese Vorheizform also geeignete mechanische Verstellmittel zur variablen Positionierung des Heizers oder der Heizer relativ zu den kritischen Abschnitten des Bauteils aufweisen.

Im Rahmen des erfindungsgemäß ausgestalteten Gesamtprozesses ist insbesondere vorgesehen, dass die konduktive Erwärmung bis zu einer materialspezifischen Härtetemperatur des Bauteils erfolgt und die Härtetemperatur für eine vorbestimmte Zeitspanne gehalten wird. Die weiter oben erwähnte T-Erfassung des Bauteils, insbesondere in dessen T-kritischen Bereichen, kann während dieses Prozess-Hauptabschnittes kontinuierlich fortgeführt oder in Zeitabständen wiederholt ausgeführt werden, um die Erreichung der gewünschten Zieltemperatur bzw. die Annäherung an diese für den thermischen Prozess zu erfassen und die konduktive Erwärmung daraufhin zu beenden.

In einer apparativen Ausgestaltung des Verfahrens sowie der Anordnung ist vorgesehen, dass das Vorheizen in einer Station einer Bearbeitungsanlage erfolgt, die separat von einer Haupt-Erwärmungsstation ist, in der die konduktive Erwärmung vorgenommen wird.

Im Übrigen ergeben sich vorrichtungsseitige Ausgestaltungen der Erfindung für den Fachmann weitestgehend aus den oben erläuterten Verfahrensaspekten und werden daher hier nicht nochmals ausführlich erläutert.

Jedoch sei erwähnt, dass die Anordnung insbesondere eine Vorheizeinrichtung umfassen kann, welche einen oder mehrere Induktor/en und/oder Widerstandsheizer und/oder Strahlungsheizer, insbesondere ausgeführt als NIR-Strahler, aufweist, welche insbesondere in einer an die Gestalt des Bauteils angepassten Vorheizform untergebracht sind.

In einer weiteren wichtigen Ausführung umfasst die Anordnung eine Steuer- oder Regeleinrichtung zur Steuerung oder Regelung der Vorheizeinrichtung, insbesondere aufgrund einer Messung der Ist-Temperatur der durch Biegen verformten Bereiche mittels eines oder mehrerer optischen Pyrometer oder Kontaktpyrometer.

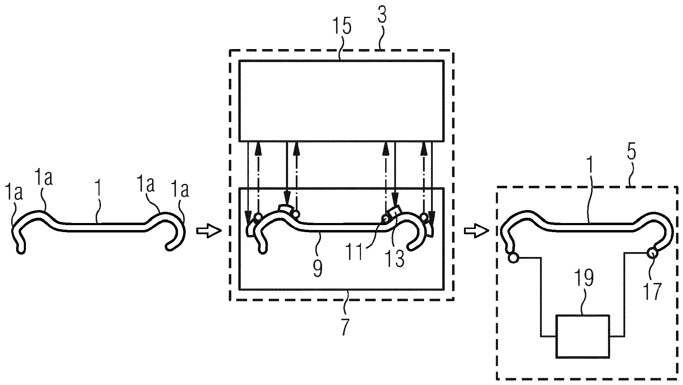

Vorteile und Zweckmäßigkeiten der Erfindung ergeben sich im Übrigen aus der nachfolgenden Beschreibung eines Ausführungsbeispiels anhand der einzigen Figur. Diese zeigt in Art eines Blockschaltbildes die wesentlichen Schritte einer Ausführung des vorgeschlagenen Verfahrens sowie die zugehörigen Anordnungskomponenten.

Die Figur zeigt schematisch, wie ein Fahrwerksstabilisator 1 einer Zwei-Phasen-Wärmebehandlung zunächst in einer Vorheizstation 3 und danach in einer Vergütungsstation 5 unterzogen wird. Der Fahrwerksstabilisator ist hier vereinfacht als zweidimensional verformtes Rohr mit vier durch Biegen verformte Bereichen 1a gezeigt. In der Praxis kann es sich auch um ein dreidimensional verformtes Teil handeln, welches neben einem oder mehreren rohrförmigen Abschnitt/en auch flach gepresste Abschnitte aufweisen kann. Es versteht sich, dass ein solcher Stabilisator auch mehr oder weniger durch Biegen verformte Abschnitte haben kann.

Zur Durchführung eines ersten thermischen Behandlungsschrittes, nämlich eines lokalen Vorheizens der durch Biegen vorgeformten Abschnitte 1a, wird der Stabilisator 1 in der Vorheizstation eine Vorheizform 7 eingelegt, die eine entsprechend der Gestalt des Stabilisators geformte Ausnehmung 9 aufweist. Der Ausnehmung 9 sind in denjenigen Bereichen, in denen die durch Biegen vorgeformten Abschnitte 1a des Stabilisators zu liegen kommen, jeweils ein T-Sensor 11 und ein Heizelement 13 zugeordnet. Sowohl die T-Sensoren 11 als auch die Heizelemente 13 befinden sich jeweils an der Außenseite der Ausnehmungs-Bereiche und dienen dazu, die Temperatur an der Außenseite der gebogenen Bereiche 1a im in die Vorheizform 9 eingelegten Zustand des Stabilisators 1 zu messen und die Außenseiten der gebogenen Bereiche lokal gezielt zu erwärmen.

Zur Steuerung dieser lokalen Erwärmung in der ersten Phase des erwähnten Zwei-Phasen-Behandlungsprozesses dient eine Auswertungs- und Steuereinheit 15, der die Signale der einzelnen T-Sensoren 11 zugeführt werden und in der diese Signale zur Gewinnung von Steuersignalen verarbeitet werden. Aufgrund der gewonnenen Steuersignale werden den Heizern 13 zeit- und/oder amplitudengesteuerte Betriebsspannungen zugeführt.

Nachdem in der Vorheizstation 3 eine gewünschte Vor-Erwärmung der Außenseiten der gebogenen Bereiche des Stabilisators erreicht wurde, wird der Stabilisator in der gezeigten Ausführung aus der Vorheizform 9 entnommen und in die zweite Behandlungsstation (Vergütungsstation) 5 überführt. Dort wird ihm über an seine Enden angelegte Elektroden 17 und eine mit diesen verbundene Stromquelle 19 ein Stromfluss mit hoher Stromstärke eingeprägt, der zu einer starken konduktiven Erwärmung auf eine vorbestimmte Zieltemperatur eines Vergütungs- bzw. Härtungsschrittes führt.

## Patentansprüche

1. Verfahren zur thermischen Behandlung eines metallischen Bauteils, das im Wesentlichen rohrförmig ist oder einen rohrförmigen Abschnitt hat, das/der ein erstes und zweites Ende und mindestens einen durch Biegen verformten Bereich aufweist, in dem der Materialquerschnitt infolge des Biegens ungleichmäßig ist, mittels konduktiver Erwärmung über an das erste und zweite Ende angelegte Elektroden, wobei das Bauteil vor der oder in einem ersten Zeitabschnitt der konduktiven Erwärmung lokal auf jener Seite des gebogenen Bereiches, wo der Materialquerschnitt verringert ist, vorgeheizt wird.

2. Verfahren nach Anspruch 1, wobei es sich bei dem Bauteil um einen Fahrwerkstabilisator eines Landfahrzeuges handelt, der mindestens zwei durch Biegen verformte Bereiche aufweist, wobei jeder der verformten Bereiche lokal vorgeheizt wird.

3. Verfahren nach Anspruch 1 oder 2, wobei das Vorheizen auf eine im Bauteil erreichte Temperatur im Bereich zwischen 50 °C und 250 °C ausgeführt wird.

4. Verfahren nach einem der vorangehenden Ansprüche, wobei das Vorheizen durch induktive Erwärmung mittels eines dem oder jedem durch Biegen verformten Bereich zugeordneten Induktors und/oder Widerstandsheizers und/oder Strahlungsheizers und/oder eines Brenners oder einer Heißluftquelle ausgeführt wird.

5. Verfahren nach Anspruch 4, wobei beim Vorsehen mehrerer Induktoren oder Widerstandsheizer oder Strahlungsheizer und/oder Brenner und/oder Heißluftquellen jede einzeln steuer- oder regelbar ist, wobei für die Steuerung oder Regelung insbesondere die Ist-Temperatur des jeweiligen durch Biegen verformten Bereiches erfasst und das Temperatursignal für die Steuerung bzw. Regelung zu Grunde gelegt wird.

6. Verfahren nach Anspruch 5, wobei die Temperatur berührungslos mittels eines optischen Pyrometers oder mittels eines mit Federkraft an den jeweiligen Bereich angedrückten Kontaktpyrometers gemessen wird.

7. Verfahren nach einem der Ansprüche 3 bis 6, wobei das Bauteil zum Vorheizen in eine an seine Gestalt angepasste Vorheizform verbracht wird, in der der Induktor oder die Induktoren oder Widerstandsheizer oder Strahlungsheizer platziert sind.

8. Verfahren nach einem der Ansprüche 3 bis 7, wobei der Induktor oder die Induktoren oder Widerstandsheizer oder Strahlungsheizer und/oder Brenner und/oder Heißluftquellen beim Vorheizen in ihrer Position relativ zum Bauteil einstellbar positioniert werden.

9. Verfahren nach einem der vorangehenden Ansprüche, wobei beim Vorsehen von einem oder mehreren Strahlungsheizern diese/r als NIR-Strahler ausgebildet ist/sind.

10. Verfahren nach einem der vorangehenden Ansprüche, wobei die konduktive Erwärmung bis zu einer materialspezifischen Härtetemperatur des Bauteils erfolgt und die Härtetemperatur für eine vorbestimmte Zeitspanne gehalten wird.

11. Verfahren nach einem der vorangehenden Ansprüche, wobei das Vorheizen in einer Station einer Bearbeitungsanlage erfolgt, die separat von einer Haupt-Erwärmungsstation ist, in der die konduktive Erwärmung vorgenommen wird.

12. Anordnung zur Durchführung des Verfahrens nach einem der vorangehenden Ansprüche, mit einer Behandlungsstation, die einen Generator und mit dem Generator verbundene und an das erste und zweite Ende des Bauteils anschließbare Elektroden zur Aufprägung eines im Generator erzeugten Stroms auf das gesamte im Wesentlichen rohrförmige Bauteil oder den rohrförmigen Abschnitt des Bauteils sowie eine Vorheizeinrichtung zur lokalen Erwärmung des/der durch Biegen verformten Bereichs oder Bereiche auf jener Seite des gebogenen Bereiches, wo der Materialquerschnitt verringert ist, aufweist.

13. Anordnung nach Anspruch 12, wobei die Vorheizeinrichtung von der Behandlungsstation mit den Elektroden separiert ist.

14. Anordnung nach Anspruch 12 oder 13, wobei die Vorheizeinrichtung einen oder mehrere Induktor/en und/oder Widerstandsheizer und/oder Strahlungsheizer, insbesondere ausgeführt als NIR-Strahler, und/oder Brenner und/oder Heißluftquellen aufweist, welche insbesondere in einer an die Gestalt des Bauteils angepassten Vorheizform untergebracht sind.

15. Anordnung nach einem der Ansprüche 12 - 14, mit einer Steuer- oder Regeleinrichtung zur Steuerung oder Regelung der Vorheizeinrichtung, insbesondere aufgrund einer Messung der Ist-Temperatur der durch Biegen verformten Bereiche mittels eines oder mehrerer optischen Pyrometer oder Kontaktpyrometer.

## Claims

1. A method of thermally treating a metallic component which is substantially tubular or has a tubular portion having first and second ends and at least one region which is deformed by bending and in which the material cross-section is non-uniform as a result of the bending, by means of conductive heating via electrodes applied to the first and second ends, wherein the component is preheated locally on that side of the bent region where the material cross-section is reduced prior to or in a first period of the conductive heating.

2. The method of claim 1, wherein the component is a landing gear stabilizer of a land vehicle having at least two regions deformed by bending, wherein each of the deformed regions is locally preheated.

3. The method according to claim 1 or 2, wherein the preheating is carried out to a temperature reached in the component in the range between 50 °C and 250 °C.

4. A method according to any one of the preceding claims, wherein the preheating is carried out by inductive heating by means of an inductor and/or resistance heater and/or radiant heater and/or a burner or a hot air source associated with the or each region deformed by bending.

5. Method according to claim 4, wherein, when several inductors or resistance heaters or radiant heaters and/or burners and/or hot air sources are provided, each can be controlled or regulated individually, wherein for the control or regulation in particular the actual temperature of the respective region deformed by bending is detected and the temperature signal is used as a basis for the control or regulation.

6. The method according to claim 5, wherein the temperature is measured without contact by means of an optical pyrometer or by means of a contact pyrometer pressed against the respective area with spring force.

7. The method according to any one of claims 3 to 6, wherein the component is moved for preheating into a preheating mold adapted to its shape, in which the inductor or inductors or resistance heaters or radiant heaters are placed.

8. The method according to any one of claims 3 to 7, wherein the inductor or inductors or resistance heaters or radiant heaters and/or burners and/or hot air sources are adjustably positioned relative to the component during preheating.

9. A method according to any one of the preceding claims, wherein, when one or more radiant heaters are provided, the radiant heater(s) is/are configured as NIR emitters.

10. A method according to any one of the preceding claims, wherein conductive heating is carried out to a material-specific curing temperature of the component and the curing temperature is maintained for a predetermined period of time.

11. A method according to any one of the preceding claims, wherein the preheating is performed in a station of a processing plant that is separate from a main heating station in which conductive heating is performed.

12. An arrangement for carrying out the method according to any one of the preceding claims, comprising a treatment station having a generator and electrodes connected to the generator and connectable to the first and second ends of the component for impressing a current generated in the generator on the entire substantially tubular component or tubular section of the component, and a preheating device for locally heating the area or areas deformed by bending on that side of the bent area where the material cross-section is reduced.

13. The arrangement according to claim 12, wherein the preheating device is separated from the treatment station with the electrodes.

14. Arrangement according to claim 12 or 13, wherein the preheating device comprises one or more inductor(s) and/or resistance heater(s) and/or radiant heater(s), in particular implemented as NIR radiator(s), and/or burner(s) and/or hot air source(s), which are accommodated in particular in a preheating mold adapted to the shape of the component.

15. Arrangement according to any one of claims 12 - 14, comprising a control or regulating device for controlling or regulating the preheating device, in particular on the basis of a measurement of the actual temperature of the areas deformed by bending by means of one or more optical pyrometers or contact pyrometers.

## Revendications

1. Procédé de traitement thermique d'une pièce métallique, qui est essentiellement tubulaire ou qui a une section tubulaire, qui présente une première et une deuxième extrémité et au moins une zone déformée par pliage, dans laquelle la section transversale du matériau n'est pas uniforme en raison du pliage, au moyen d'un chauffage par conduction via des électrodes appliquées à la première et à la deuxième extrémité, dans lequel la pièce est préchauffée avant ou pendant une première période du chauffage par conduction, localement sur le côté de la zone pliée où la section transversale du matériau est réduite.

2. Procédé selon la revendication 1, dans lequel le composant est une barre stabilisatrice de châssis d'un véhicule terrestre, qui comprend au moins deux zones déformées par pliage, chacune des zones déformées étant préchauffée localement.

3. Procédé selon la revendication 1 ou 2, dans lequel le préchauffage est effectué à une température atteinte dans l'élément de construction comprise entre 50°C et 250°C.

4. Procédé selon l'une quelconque des revendications précédentes, dans lequel le préchauffage est réalisé par chauffage par induction au moyen d'un inducteur et/ou d'un chauffage par résistance et/ou d'un chauffage par rayonnement et/ou d'un brûleur ou d'une source d'air chaud associés à la ou à chaque zone déformée par pliage.

5. Procédé selon la revendication 4, dans lequel, lorsqu'il est prévu plusieurs inducteurs ou chauffages par résistance ou chauffages par rayonnement et/ou brûleurs et/ou sources d'air chaud, chacun peut être commandé ou réglé individuellement, la température réelle de la zone respective déformée par pliage étant notamment détectée pour la commande ou la régulation et le signal de température étant utilisé comme base pour la commande ou la régulation.

6. Procédé selon la revendication 5, dans lequel la température est mesurée sans contact au moyen d'un pyromètre optique ou au moyen d'un pyromètre à contact pressé par ressort contre la zone correspondante.

7. Procédé selon l'une quelconque des revendications 3 à 6, dans lequel la pièce est placée, pour être préchauffée, dans un moule de préchauffage adapté à sa forme, dans lequel sont placés le ou les inducteurs ou les éléments chauffants résistifs ou les éléments chauffants radiants.

8. Procédé selon l'une quelconque des revendications 3 à 7, dans lequel l'inducteur ou les inducteurs ou les dispositifs de chauffage par résistance ou les dispositifs de chauffage par rayonnement et/ou les brûleurs et/ou les sources d'air chaud sont positionnés de manière réglable dans leur position par rapport à la pièce lors du préchauffage.

9. Procédé selon l'une quelconque des revendications précédentes, dans lequel, lorsque l'on prévoit un ou plusieurs éléments de chauffage par rayonnement, ceux-ci sont conçus comme des émetteurs NIR.

10. Procédé selon l'une des revendications précédentes, dans lequel le chauffage par conduction est effectué jusqu'à une température de durcissement de l'élément de construction spécifique au matériau et la température de durcissement est maintenue pendant une durée prédéterminée.

11. Procédé selon l'une quelconque des revendications précédentes, dans lequel le préchauffage est effectué dans un poste d'une installation de traitement qui est séparé d'un poste de chauffage principal dans lequel le chauffage par conduction est effectué.

12. Agencement pour la mise en œuvre du procédé selon l'une des revendications précédentes, comprenant un poste de traitement qui comporte un générateur et des électrodes reliées au générateur et pouvant être raccordées à la première et à la deuxième extrémité de la pièce pour appliquer un courant généré dans le générateur à l'ensemble de la pièce sensiblement tubulaire ou à la section tubulaire de la pièce, ainsi qu'un dispositif de préchauffage pour chauffer localement la ou les zones déformées par pliage, du côté de la zone pliée où la section transversale du matériau est réduite.

13. Ensemble selon la revendication 12, dans lequel le dispositif de préchauffage est séparé du poste de traitement avec les électrodes.

14. Agencement selon la revendication 12 ou 13, dans lequel le dispositif de préchauffage comprend un ou plusieurs inducteur(s) et/ou dispositif(s) de chauffage par résistance et/ou dispositif(s) de chauffage par rayonnement, réalisé(s) en particulier sous la forme d'un émetteur NIR, et/ou brûleur(s) et/ou sources d'air chaud, qui sont logés en particulier dans un moule de préchauffage adapté à la forme de la pièce.

15. Agencement selon l'une des revendications 12 à 14, comprenant un dispositif de commande ou de régulation pour commander ou réguler le dispositif de préchauffage, notamment sur la base d'une mesure de la température réelle des zones déformées par pliage au moyen d'un ou plusieurs pyromètres optiques ou pyromètres de contact.
